# EUROPEAN PATENT SPECIFICATION

(11) **EP 1 867 846 B1**
(45) Date of publication and mention of the grant of the patent: **23.07.2008**
(21) Application number: 07010613.3
(22) Date of filing: 29.05.2007
(51) Int. Cl.: F01N 3/025, F01N 3/035, F01N 9/00, F02D 41/02, F02D 41/40

(54) **DPF regeneration system of internal combustion engine**
DPF-Regenerationssystem eines Verbrennungsmotors
Système de régénération de DPF de moteur à combustion interne

(30) Priority: 16.06.2006 JP 2006167264
(43) Date of publication of application: 19.12.2007
(73) Proprietor: HONDA MOTOR CO., LTD., Tokyo 107-8556 (JP)
(72) Inventor: Kato, Yoshihisa, Wako-shi Saitama 351-0193 (JP); Fukushima, Hiroyuki, Wako-shi Saitama 351-0193 (JP)
(74) Representative: Trossin, Hans-Jürgen

(56) References cited:
- EP-A1- 1 176 290
- JP-A- 59 155 525
- US-A- 4 615 173

## Description

The present invention relates to a system for and a method of regenerating a DPF (Diesel Particulate Filter) installed in the exhaust system of an internal combustion engine, more precisely a compression-ignition engine (diesel engine) to remove fine particulates or particulate matters (PMs) from the exhaust gas in microporous trap, according to the preamble parts te of claims 1 and 4, respectively.

A system of the generic type is known from US-A-4 615 173 or JP 59 155525 A.

As the captured and deposited fine particulates increase, the filter progressively clogs and hence, its ability to capture the particulates drops. Therefore, the practice is to estimate the amount of particulates deposited on the DPF and when the estimated amount exceeds a threshold value, to supply high temperature exhaust gas to the DPF to burn off the particulates and regenerate the DPF.

A technique to supply high temperature exhaust gas to the DPF is taught, for example, by United States Patent 6,865,883 (corresponding to Japanese Laid-Open Patent Application No. 2004-190666). In this prior art, a diesel engine is provided with a load bank heater (having electrical heating elements) in the exhaust system that is activated to directly heat exhaust gas raising the temperature thereof and approaching the temperature required for regeneration. Activation of the heater increases the load on the engine and in turn further increases the temperature of the exhaust system to a level required for regeneration. This prior art is disadvantageous, since it needs the load bank heater having a plurality of heating elements in the engine exhaust system, rendering the structure complicated.

An object of the present invention is to provide a system for and a method of regenerating a DPF installed in an exhaust system of an internal combustion engine that is simple in structure, but can increase the load of the engine to increase the temperature of the exhaust system, when regenerating the DPF.

The present invention achieves the object by providing, in its first aspect, a system for regenerating a DPF with all features of claim 1. Such a system is i.a installed in an exhaust system of an internal combustion engine to capture particulates in exhaust gas generated by the engine, having regenerating means for regenerating the DPF by burning off the particulates deposited on the DPF and a fuel pump installed in a fuel supply system to deliver fuel contained in a fuel tank to a fuel injector, and comprising load increasing means for increasing load of the fuel pump when the DPF is to be regenerated.

The present invention also achieves the object by providing, in its second aspect, a method of regenerating a DPF with all features of claim 4, such a method works for a DPF installed in an exhaust system of an internal combustion engine to capture particulates in exhaust gas generated by the engine having regenerating means for regenerating the DPF by burning off the particulates deposited on the DPF and a fuel pump installed in a fuel supply system to deliver fuel contained in a fuel tank to a fuel injector, wherein the method i.a. comprises the step of increasing load of the fuel pump when the DPF is to be regenerated.

FIG. 1 is a schematic drawing showing the overall configuration of the DPf regeneration system of an internal combustion engine according to an embodiment of the invention; and

FIG. 2 is a flowchart showing the operation of the system illustrated in FIG. 1.

A system for and a method of regenerating a DPF installed in an internal combustion engine according to an embodiment of the present invention will now be explained with reference to the attached drawings.

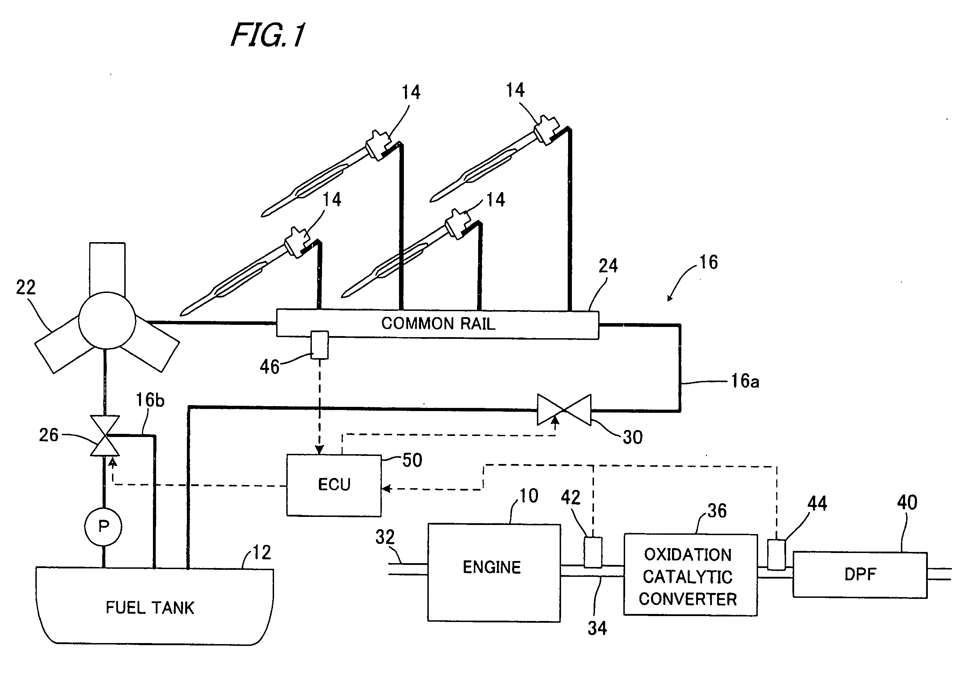

FIG. 1 is a schematic drawing showing the overall configuration of a DPF regeneration system of an internal combustion engine according to the embodiment.

In FIG. 1, the reference numeral 10 designates a four-cylinder internal combustion engine, more specifically diesel engine (compression-ignition engine). The engine 10 has a fuel tank 12 containing fuel (diesel oil or diesel fuel)) and four fuel injectors 14 each provided at a location facing to the combustion chamber of the associated cylinder. A fuel supply system or passage 16 starting from the fuel tank 12 and ending at the injectors 14 is provided with a first fuel pump 20, a second fuel pump 22 and a common rail (fuel-pressure storing chamber) 24.

The first fuel pump 20 draws fuel from the fuel tank 12 and delivers pressurized fuel downstream. The first fuel pump 20 comprises a gear pump connected to the crankshaft (not shown) of the engine 10, and is driven by the engine 10.

The second fuel pump 22 is made greater in capacity (cc/min) than the first fuel pump 20. The second fuel pump 22 receives the pressurized fuel delivered by the first fuel pump 20, further increases the pressure and delivers it downward. Like the first fuel pump 20, the second fuel pump 22 comprises a gear pump connected to the crankshaft (not shown) of the engine 10 to be driven by the engine 10.

The common rail 24 installed downstream of the second fuel pump 22 has a pipe-like shape and temporarily stores the high-pressure fuel pressurized and delivered by the second fuel pump 22. The injectors 14 are connected to the common rail 24. The common rail 24 is connected to the fuel tank 12 through a first return path 16a.

A first flow regulating valve 26 is provided, at a position between the first fuel pump 20 and second fuel pump 22 in the fuel supply system 16, to regulate flow rate of the fuel to be delivered to the second fuel pump 22. A second flow regulating valve 30 is provided at the first return path 16a connecting the common rail 24 to the fuel tank 12 to regulate flow rate of the fuel to be returned to the fuel tank 12, in other words regulate flow rate of the fuel to be delivered to the common rail 24.

In the engine 10, air sucked in through an air cleaner (not shown) flows through an air intake system 32 (comprising an intake pipe downstream of the air cleaner and intake manifold connected to the intake pipe) and arrives at the individual cylinders to be drawn into their combustion chambers (not shown) when the associated intake valve (not shown) opens and the associated piston (not shown) descends. The inspired air is compressed and reaches a high temperature when the piston ascends.

Pressurized fuel stored in the common rail 24 is injected into the combustion chamber when the associated injector 14 is opened and the injected fuel spontaneously ignites and bums upon coming in contact with the compressed, high-temperature air. As a result, the piston is first driven downward and thereafter ascends to discharge the exhaust gas into an exhaust manifold (exhaust system) upon opening of an associated exhaust valve (not shown). The exhaust gas then flows into a downstream exhaust pipe (exhaust system) 34.

An oxidation catalytic converter (illustrated as "CAT") 36 utilizing platinum or the like as catalyst is installed in the exhaust pipe 34. The oxidation catalytic converter 36 oxidizes and removes unburned hydrocarbons in the exhaust gas. A DPF (Diesel Particulate Filter; filter) 40 is installed downstream of the oxidation catalytic converter 36 for capturing particulates or particulate matters (PMs) in the exhaust gas.

The DPF 40 comprises a ceramic honeycomb filter internally provided with exhaust gas passages whose upstream ends are closed and downstream ends are opened arranged alternately with exhaust gas passages whose upstream ends are opened and downstream ends are closed. Microporous walls formed with numerous holes of around 10 µm diameter are provided between adjacent passages. Particulates contained in the exhaust gas are captured in these holes.

After passing through the DPF 40, the exhaust gas passes through a silencer, tailpipe and the like (none of which are shown) to be discharged to outside of the engine 10.

A first exhaust gas temperature sensor 42 is installed in the exhaust system of the engine 10 at a suitable location upstream of the oxidation catalytic converter 36 and produces an output indicative of the exhaust gas temperature on the upstream side of the oxidation catalytic converter 36.

A second exhaust gas temperature sensor 44 is installed downstream of the oxidation catalytic converter 36 and upstream of the DPF 40 and produces an output indicative of the exhaust gas temperature on the upstream side of the DPF 40.

A pressure sensor 46 is installed in the common rail 24 in the fuel supply system 16 and produces an output indicative of the pressure of the fuel stored in the common rail 24.

The outputs of the foregoing sensors are sent to an ECU (Electronic Control Unit) 50. The ECU 50 is constituted as a microcomputer comprising a CPU, ROM, RAM and input/output circuit.

The ECU 50 is configured to be capable of communicating with an engine ECU (not shown) that controls the operation of the engine 10, and is provided from the engine ECU with the fuel injection amount Q, the engine speed NE, etc., calculated or detected by the engine ECU. The ECU 50 calculates an estimated amount of particulates deposited on the DPF 40 from the fuel injection amount Q, the engine speed NE, etc., compares the calculated estimated amount with a threshold value, determines it as a time to regenerate the DPF 40 if the calculated estimated amount exceeds the threshold value, and conducts the regeneration.

The first and second flow regulating valves 26 and 30 are connected to the ECU 50 and are driven in response to commands sent from the ECU 50. Specifically, the first flow regulating valve 26 regulates flow rate of the fuel to be returned to the fuel tank 12 through a second return path 16b when it is driven by the ECU 50 to open. The second flow regulating valve 30 regulates flow rate of the fuel to be returned to the fuel tank 12 though the first return path 16a when it is driven by the ECU 50 to open.

The operation of the system, i.e., the method of regenerating the DPF 40 installed in the exhaust system 34 of the engine 10 will be explained.

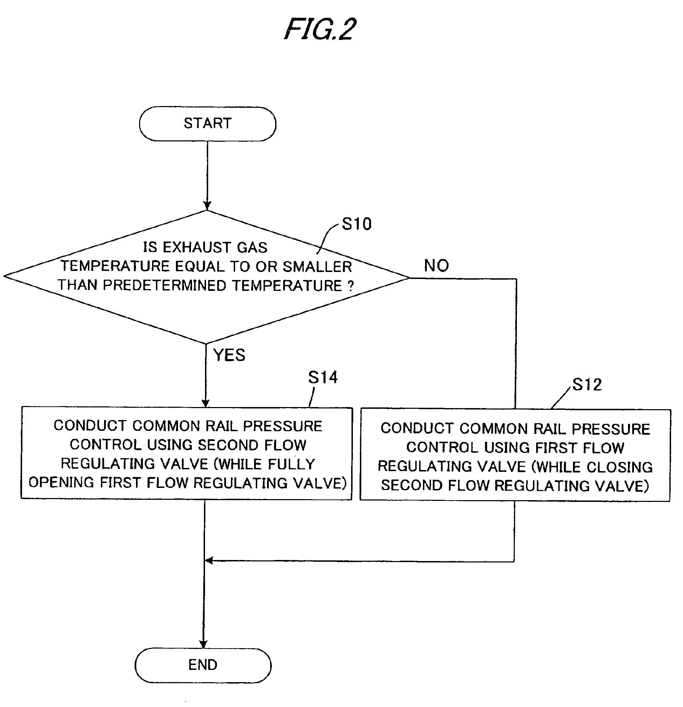

FIG. 2 is a flowchart showing the operation. The program illustrated there is executed by the ECU 50 at predetermined time intervals when the ECU 50 determines that it is the time to regenerate the DPF 40.

The program begins in S 10 in which it is determined whether the exhaust gas temperature is equal to or smaller (lower) than a predetermined temperature. Here, the exhaust gas temperature is the aforesaid temperature on the upstream side of the oxidation catalytic converter 36 detected by the first exhaust gas temperature sensor 42.

When the engine 10 is at or above medium load, since the temperature of the exhaust system has been raised to a certain level, the result in S10 is normally negative and the program proceeds to S12 in which common rail pressure control is conducted using the first flow regulating valve 26.

Specifically, the pressure of the fuel in the common rail 24 is controlled to a predetermined first pressure by opening/closing the first flow regulating valve 26 to regulate the fuel flow rate in accordance with an appropriate control law, while monitoring the fuel pressure in the common rail 24 through the pressure sensor 46. During the control, the second flow regulating valve 30 is kept closed.

More specifically, the fuel pressure in the common rail 24 is controlled to the predetermined first pressure by repeating the procedure to drive the second fuel pump 22 to increase fuel flow rate when the common rail fuel pressure detected by the pressure sensor 46 is smaller than the predetermined first pressure and to close the first flow regulating valve 26 to return a part of the fuel to the fuel tank 12 by opening the flow regulating valve 26 when the common rail fuel pressure is greater than the predetermined first pressure. In this instance, since the driving of the second fuel pump 22 is restricted to minimum, unnecessary increase in friction in the engine 10 can be suppressed.

In the regeneration of the DPF 40, when the ECU 50 determines that the exhaust gas temperature is higher than the predetermined temperature, but is still insufficient to burn off the particulates deposited on the DPF 40, it calculates a post fuel injection amount from the fuel injection amount Q, the engine speed NE, etc., and conducts post fuel injection through the injector 14 at a time point when the operating cycle of the engine transits from the expansion stroke to the exhaust stroke or thereabout.

The injected fuel flows to the exhaust system and arrives at the oxidation catalytic converter 36 where oxidation reaction (burning) takes place. The exhaust gas heated by the burning of the injected fuel flows downstream to the DPF 40 and bums off the deposited particulates to regenerate the DPF 40.

On the other hand, when the engine 10 is under low load, since the temperature of the exhaust system is low, the result in S10 is normally affirmative and the program proceeds to S14 in which the common rail pressure control is conducted using the second flow regulating valve 30.

Specifically, the fuel pressure in the common rail 24 is controlled to a predetermined second pressure by driving the second fuel pump 22 to deliver maximum flow rate of the fuel to the common rail 24 while keeping the first flow regulating valve 27 fully-opened, and by opening/closing the second flow regulating valve 30 to regulate flow rate of the fuel in accordance with an appropriate control law in response to the monitored fuel pressure in the common rail 24 through the pressure sensor 46.

More specifically, the fuel pressure in the common rail 24 is controlled to the predetermined second pressure by repeating the procedure to drive the second fuel pump 22 to deliver maximum fuel flow to the common rail 24 and to open the second flow regulating valve 30 to regulate flow rate of the fuel (a part of the fuel) to be returned to the fuel tank 12 to drop the fuel pressure when the common rail fuel pressure is greater than the predetermined second pressure. The predetermined second pressure is set to be higher than or equal to the predetermined first pressure.

With this, since the load and work of the second fuel pump 22 is increased, the friction of the engine 10 that drives the second fuel pump 22 is increased. As a result, the fuel injection amount Q will accordingly be increased, thereby enabling to increase or raise the temperature of the exhaust system.

It should be noted that, since the engine 10 is under low load, when the program proceeds to S14, the aforesaid post fuel injection is more likely to be conducted to further raise the exhaust system temperature such that the particulates deposited on the DPF 40 can surely be burned off.

As stated above, the embodiment is configured to have a system for and a method of regenerating a DPF (40) installed in an exhaust system (34) of an internal combustion engine (10) to capture particulates in exhaust gas generated by the engine, having; regenerating means (ECU 50) for regenerating the DPF by burning off the particulates deposited on the DPF; and a fuel pump (22) installed in a fuel supply system (16) to deliver fuel contained in a fuel tank (12) to a fuel injector (14) when driven by the engine (10), characterized by: load increasing means (ECU 50, S10, S14) for or step of increasing load of the fuel pump, more precisely for increasing the load of the fuel pump to increase the load of the engine when the DPF is to be regenerated.

With this, since the load and work of the second fuel pump 22 is increased, the friction of the engine 10 driving the second fuel pump 22 is also increased and hence, the fuel injection amount Q will be increased. Thus, although simple in structure, the system can increase or raise the temperature of the exhaust system when regenerating the DPF 40. In particular, it becomes possible to enhance the ability to regenerate the DPF 40 under low engine load such as idling or running through jammed traffic where the exhaust gas temperature is relatively low.

In the system and method, the load increasing means or step (ECU 50, S10, S14) increases the load of the fuel pump (22) when a temperature of the exhaust system (exhaust gas temperature) is equal to or smaller than a predetermined temperature. With this, in addition to the effects and advantages mentioned above, it becomes possible to restrict the increase of load to a necessary extent and to suppress the increase of fuel consumption.

The system and method further includes: a first flow regulating valve (26) installed in the fuel supply system (16) to regulate flow rate of the fuel to be supplied to the (second) fuel pump (22); and a second flow regulating valve (30) installed in the fuel supply system (16) to regulate the flow rate of the fuel to be returned to the fuel tank (12) from a fuel-pressure storing chamber (common rail 24) installed downstream of the fuel pump; and the load increasing means or step (ECU 50, S10, S14) increases the load of the fuel pump (22) by driving the fuel pump to increase the flow rate of the fuel to be supplied to the fuel-pressure storing chamber (24) while opening the first flow regulating valve (26), and by regulating the flow rate through the second flow regulating valve (30) to control the fuel pressure in the fuel-pressure storing chamber (24).

With this, in addition to the effects and advantages mentioned above, it becomes possible to surely increase or raise the temperature of the exhaust system at the time of regenerating the DPF 40 simply by operating the first and second flow regulating valves 26 and 30 that are normally installed in the fuel supply system.

In addition, the fuel pump (22) is a pump driven by the engine (10), and the load increasing means or step increases the load of the fuel pump so as to increase the load of the engine (10) such that a temperature of the exhaust system (34) is increased.

In addition, the system and method further includes: post fuel injection conducting means (50) for or step of conducting post fuel injection through the fuel injector at a time point when operating cycle of the engine (10) transits from an expansion stroke to an exhaust stroke or thereabout, to increase the temperature of the exhaust system (34).

It should be noted in the above that, although the exhaust gas temperature is determined from the temperature detected by the first exhaust gas temperature sensor 42 at the processing in S10, the temperature detected by the second exhaust gas temperature sensor 44 can instead be used. Alternatively, it is possible to detect the temperature of the oxidation catalytic converter 36 or the DPF 40 through a sensor and to use the thus-detected temperature at the processing in S10. It is also possible to use, instead of the detected temperature, an estimated temperature.

It should also be noted that the disclosed structure of the exhaust system including the oxidation catalytic converter 36 is an example and should not be limited thereto. It suffices if the DPF 40 in the exhaust system is the one that should be regenerated.

It should further be noted that, although the time to regenerate the DPF 40 is determined from the fuel injection amount Q and engine speed NE, etc., it can instead be determined from the difference between the upstream and downstream pressures of the DPF 40.

It should further be noted that, although the post fuel injection is conducted to raise the exhaust system temperature when the temperature is insufficient for burning off the particulates deposited on the DPF 40, it is alternatively possible to raise the temperature by using any other means than the post fuel injection.

It should further be noted that, although the second fuel pump 22 is configured to be a gear pump, it can be an electric pump.

It should further be noted that, although the foregoing explanation is made taking application of the invention to a vehicle engine as an example, the invention can also be applied to an engine for a boat propulsion system such as an outboard motor having a vertically oriented crankshaft.

In a system for or method of regenerating a DPF 40 installed in an exhaust system 34 of an internal combustion engine 10 to capture particulates in exhaust gas generated by the engine, by burning off the particulates deposited thereon the DPF and having a fuel pump 22 installed in a fuel supply system 16 to deliver fuel contained in a fuel tank 12 to a fuel injector 14, the load of the fuel pump, more specifically the load of the engine is increased when the DPF is to be regenerated such that the temperature of the exhaust system is increased.

## Claims

1. A system for regenerating a DPF (40) installed in an exhaust system (34) of an internal combustion engine (10) to capture particulates in exhaust gas generated by the engine, having:
regenerating means (50) for regenerating the DPF by burning off the particulates deposited on the DPF; and
a fuel pump (22) installed in a fuel supply system (16) to deliver fuel contained in a fuel tank (12) to a fuel injector (14); and
load increasing means (50, S10, S14) for increasing load of the fuel pump when the DPF is to be regenerated;
**characterized in that** the fuel pump (22) is a pump driven by the engine (10), and the load increasing means increases the load of the fuel pump so as to increase the load of the engine (10) such that a temperature of the exhaust system (34) is increased.

2. The system according to claim 1, wherein the load increasing means increases the load of the fuel pump (22) when a temperature of the exhaust system is equal to or smaller than a predetermined temperature.

3. The system according to claim 1 or 2, further having:
a first flow regulating valve (26) installed in the fuel supply system (16) to regulate flow rate of the fuel to be supplied to the fuel pump (22); and
a second flow regulating valve (30) installed in the fuel supply system (16) to regulate the flow rate of the fuel to be returned to the fuel tank (12) from a fuel-pressure storing chamber (24) installed downstream of the fuel pump;
and the load increasing means increases the load of the fuel pump (22) by driving the fuel pump to increase the flow rate of the fuel to be supplied to the fuel-pressure storing chamber (24) while opening the first flow regulating valve (26), and by regulating the flow rate through the second flow regulating valve (30) to control the fuel pressure in the fuel-pressure storing chamber (24).

4. A method of regenerating a DPF (40) installed in an exhaust system (34) of an internal combustion engine (10) to capture particulates in exhaust gas generated by the engine having regenerating means (50) for regenerating the DPF by burning off the particulates deposited on the DPF; and a fuel pump (22) installed in a fuel supply system (16) to deliver fuel contained in a fuel tank (12) to a fuel injector (14); wherein said method contains
the step of:
increasing load of the fuel pump when the DPF is to be regenerated (S10, S14), **characterized in that** the fuel pump (22) is a pump driven by the engine (10), and the step of load increasing increases the load of the fuel pump so as to increase the load of the engine (10) such that a temperature of the exhaust system (34) is increased.

5. The method according to claim 4, wherein the step of load increasing increases the load of the fuel pump (22) when a temperature of the exhaust system is equal to or smaller than a predetermined temperature.

6. The method according to claim 4 or 5, wherein the engine further having:
a first flow regulating valve (26) installed in the fuel supply system (16) to regulate flow rate of the fuel to be supplied to the fuel pump (22); and a second flow regulating valve (30) installed in the fuel supply system (16) to regulate the flow rate of the fuel to be returned to the fuel tank (12) from a fuel-pressure storing chamber (24) installed downstream of the fuel pump;
and the step of load increasing increases the load of the fuel pump (22) by driving the fuel pump to increase the flow rate of the fuel to be supplied to the fuel-pressure storing chamber (24) while opening the first flow regulating valve (26), and by regulating the flow rate through the second flow regulating valve (30) to control the fuel pressure in the fuel-pressure storing chamber (24).

## Patentansprüche

1. System zum Regenerieren eines DPF (40), der in einem Auspuffsystem (34) einer Brennkraftmaschine (10) installiert ist, um Partikel im von der Maschine erzeugten Abgas aufzufangen, umfassend:
Regenerationsmittel (50) zum Regenerieren des DPF durch Abbrennen der auf dem DPF abgelagerten Partikel; und
eine Kraftstoffpumpe (22), die in einem Kraftstoffzufuhrsystem (16) installiert ist, um in einem Kraftstofftank (12) enthaltenen Kraftstoff einer Kraftstoffeinspritzung (14) zuzuführen; und
ein Lasterhöhungsmittel (50, S10, S14) zum Erhöhen der Last der Kraftstoffpumpe, wenn der DPF regeneriert werden soll;
**dadurch gekennzeichnet, dass** die Kraftstoffpumpe (22) eine von der Maschine (10) angetriebene Pumpe ist, und das Lasterhöhungsmittel die Last der Kraftstoffpumpe erhöht, um die Last der Maschine (10) derart zu erhöhen, dass eine Temperatur des Auspuffsystems (34) erhöht wird.

2. System nach Anspruch 1, worin das Lasterhöhungsmittel die Last der Kraftstoffpumpe (22) erhöht, wenn eine Temperatur des Auspuffsystems gleich oder kleiner als eine vorbestimmte Temperatur ist.

3. System nach Anspruch 1 oder 2, ferner umfassend:
ein erstes Strömungsregulierventil (26), das in dem Kraftstoffzufuhrsystem (16) installiert ist, um die Strömungsrate des der Kraftstoffpumpe (22) zuzuführenden Kraftstoffs zu regulieren; und
ein zweites Strömungsregulierventil (30), das in dem Kraftstoffzufuhrsystem (16) installiert ist, um die Strömungsrate des Kraftstoffs, der von einer stromab der Kraftstoffpumpe installierten Kraftstoffdruckspeicherkammer (24) zu dem Kraftstofftank (12) rückzuführen ist, zu regulieren, und
das Lasterhöhungsmittel die Last der Kraftstoffpumpe (22) erhöht, indem sie die Kraftstoffpumpe antreibt, um die Strömungsrate des der Kraftstoffdruckspeicherkammer (24) zuzuführenden Kraftstoffs zu erhöhen, während das erste Strömungsregulierventil (26) geöffnet wird, und die Strömungsrate durch das zweite Strömungsregulierventil (30) reguliert, um den Kraftstoffdruck in der Kraftstoffdruckspeicherkammer (24) zu steuern/zu regeln.

4. Verfahren zum Regenerieren eines DPF (40), der in einem Auspuffsystem (34) einer Brennkraftmaschine (10) installiert ist, um Partikel im von der Maschine erzeugten Abgas aufzufangen, umfassend ein Regenerationsmittel (50) zum Regenerieren des DPF durch Abbrennen der auf dem DPF abgelagerten Partikel; sowie eine Kraftstoffpumpe (22), die in einem Kraftstoffzufuhrsystem (16) installiert ist, um in einem Kraftstofftank (12) enthaltenen Kraftstoff einer Kraftstoffeinspritzung (14) zuzuführen; worin das Verfahren den Schritt enthält:
Erhöhen der Last der Kraftstoffpumpe, wenn der DPF regeneriert werden soll (S10, S14),
**dadurch gekennzeichnet, dass** die Kraftstoffpumpe (22) eine von der Maschine (10) angetriebene Pumpe ist, und der Schritt der Lasterhöhung die Last der Kraftstoffpumpe erhöht, um die Last der Maschine (10) zu erhöhen, sodass eine Temperatur des Auspuffsystems (34) erhöht wird.

5. Verfahren nach Anspruch 4, worin der Schritt der Lasterhöhung die Last der Kraftstoffpumpe (22) erhöht, wenn eine Temperatur des Auspuffsystems gleich oder kleiner als eine vorbestimmte Temperatur ist.

6. Verfahren nach Anspruch 4 oder 5, worin die Maschine ferner umfasst:
ein erstes Strömungsregulierventil (26), das in dem Kraftstoffzufuhrsystem (16) installiert ist, um die Strömungsrate des der Kraftstoffpumpe (22) zuzuführenden Kraftstoffs zu regulieren; und
ein zweites Strömungsregulierventil (30), das in dem Kraftstoffzufuhrsystem (16) installiert ist, um die Strömungsrate des Kraftstoffs, der von einer stromab der Kraftstoffpumpe installierten Kraftstoffdruckspeicherkammer (24) zu dem Kraftstofftank (12) rückzuführen ist, zu regulieren, und
der Schritt der Lasterhöhung die Last der Kraftstoffpumpe (22) erhöht, indem die Kraftstoffpumpe angetrieben wird, um die Strömungsrate des der Kraftstoffdruckspeicherkammer (24) zuzuführenden Kraftstoffs zu erhöhen, während das erste Strömungsregulierventil (26) geöffnet wird, und die Strömungsrate durch das zweite Strömungsregulierventil (30) reguliert wird, um den Kraftstoffdruck in der Kraftstoffdruckspeicherkammer (24) zu steuern/zu regeln.

## Revendications

1. Système servant à régénérer un FAP (40) installé dans un système d'échappement (34) d'un moteur à combustion interne (10) pour capturer des particules dans le gaz d'échappement généré par le moteur, ayant :
un moyen de régénération (50) destiné à régénérer le FAP en brûlant les particules déposées sur le FAP ; et
une pompe à carburant (22) installée dans un système d'acheminement de carburant (16) destinée à délivrer du carburant contenu dans un réservoir à carburant (12) jusqu'à un injecteur de carburant (14) ; et
un moyen d'augmentation de charge (50, S10, S14) pour augmenter la charge de la pompe à carburant lorsque le FAP est sur le point d'être régénéré ;
**caractérisé en ce que** la pompe à carburant (22) est une pompe entraînée par le moteur (10), et le moyen d'augmentation de charge augmente la charge de la pompe à carburant pour augmenter la charge du moteur (10) de telle sorte qu'une température du système d'échappement (34) est augmentée.

2. Système selon la revendication 1, dans lequel le moyen d'augmentation de charge augmente la charge de la pompe à carburant (22) lorsqu'une température du système d'échappement est inférieure ou égale à une température prédéterminée.

3. Système selon la revendication 1 ou 2, ayant en outre :
une première soupape de régulation de débit (26) installée dans le système d'acheminement de carburant (16) destinée à réguler un débit du carburant destiné à être acheminé jusqu'à la pompe à carburant (22) ; et
une deuxième soupape de régulation de débit (30) installée dans le système d'acheminement de carburant (16) pour réguler le débit du carburant destiné à être renvoyé au réservoir à carburant (12) depuis une chambre de stockage de pression (24) installée en aval de la pompe à carburant ;
et le moyen d'augmentation de charge augmente la charge de la pompe à carburant (22) en entraînant la pompe à carburant pour augmenter le débit du carburant destiné à être acheminé jusqu'à la chambre de stockage de pression (24) tout en ouvrant la première soupape de régulation de débit (26), et en régulant le débit par la deuxième pompe de régulation de débit (30) pour commander la pression du carburant dans la chambre de stockage de pression de carburant (24).

4. Procédé consistant à régénérer un FAP (40) installé dans un système d'échappement (34) d'un moteur à combustion interne (10) pour capturer des particules dans le gaz d'échappement généré par le moteur ayant un moyen de régénération (50) pour régénérer le FAP en brûlant les particules déposées sur le FAP ; et une pompe à carburant (22) installée dans un système d'acheminement de carburant (16) pour délivrer du carburant contenu dans un réservoir à carburant (12) jusqu'à un injecteur de carburant (14), dans lequel ledit procédé comprend l'étape consistant à :
augmenter la charge de la pompe à carburant lorsque le FAP doit être régénéré (S10, S14), **caractérisé en ce que** la pompe à carburant (22) est une pompe entraînée par le moteur (10), et l'étape d'augmentation de la charge augmente la charge de la pompe à carburant pour augmenter la charge du moteur (10) de telle sorte qu'une température du système d'échappement (34) est augmentée.

5. Procédé selon la revendication 4, dans lequel l'étape d'augmentation de la charge augmente la charge de la pompe à carburant (22) lorsqu'une température du système d'échappement est inférieure ou égale à une température prédéterminée.

6. Procédé selon la revendication 4 ou 5, dans lequel le moteur ayant en outre :
une première soupape de régulation de débit (26) installée dans le système d'acheminement de carburant (16) pour réguler le débit du carburant destiné à être acheminé jusqu'à la pompe à carburant (22), et une deuxième soupape de régulation de débit (30) installée dans le système d'acheminement de carburant (16) pour réguler le débit du carburant destiné à être renvoyé au réservoir à carburant (12) depuis une chambre de stockage de pression de carburant (24) installée en aval de la pompe à carburant ;
et l'étape d'augmentation de charge augmente la charge de la pompe à carburant (22) en entraînant la pompe à carburant pour augmenter le débit du carburant à acheminer jusqu'à la chambre de stockage de pression de carburant (24) tout en ouvrant la première soupape de régulation de débit (26), et en régulant le débit par la deuxième soupape de régulation de débit (30) pour commander la pression du carburant dans la chambre de stockage de pression de carburant (24).
